# EUROPÄISCHE PATENTSCHRIFT

(11) **EP 1 985 184 B1**
(45) Veröffentlichungstag und Bekanntmachung des Hinweises auf die Patenterteilung: **27.05.2009**
(21) Anmeldenummer: 07008434.8
(22) Anmeldetag: 25.04.2007
(51) Int. Cl.: A22C 15/00

(54) **Verfahren und Vorrichtung zum Aufnehmen von Wurstportionen auf einen Rauchstock**
Method and device for placing sausage portions on a smoking unit
Procédé et dispositif destinés à recevoir des portions de saucisses sur une barre de fumoir

(43) Veröffentlichungstag der Anmeldung: 29.10.2008
(73) Patentinhaber: Albert Handtmann Maschinenfabrik GmbH & Co. KG, 88400 Biberach (DE)
(72) Erfinder: Pfender, Wolfgang, 88250 Weingarten (DE); Baechtle, Manfred, 88433 Schemmerhofen (DE); Mueller, Gerhard, 88433 Schemmerhofen (DE); Reutter, Siegfried, 88436 Eberhardzell (DE); Schliesser, Gerhard, 88489 Wain (DE); Flach, Juergen, 89611 Obermarchtal (DE)
(74) Vertreter: Grünecker, Kinkeldey, Stockmair & Schwanhäusser Anwaltssozietät

(56) Entgegenhaltungen:
- EP-A1- 0 424 675
- WO-A-92/03929
- DE-C1- 3 322 759

## Beschreibung

Die Erfindung betrifft ein Verfahren und eine Vorrichtung zum Aufnehmen von Wurstportionen gemäß den Oberbegriffen der Ansprüche 1 und 9.

An Wurstportionen, d. h. Einzelwürste oder Wurstketten, die mit einem Clip verschlossen werden, werden teilweise auch Aufhängeschlaufen mit eingeclipt. Diese werden zum Aufhängen der Portionen, z. B. auf Rauchstöcke verwendet. Die Rauchstöcke werden wiederum z. B. in einen Rauchwagen gehängt und die Wurstwaren anschließend im hängenden Zustand z. B. in einer Rauchkammer behandelt. Teilweise werden die Produkte auch zum Verkauf an der Aufhängeschlaufe aufgehängt.

Beim Produktionsablauf werden die Hüllen in bekannter Weise gefüllt und anschließend mit einer Verschlusseinheit, d. h. einer Clipmaschine verschlossen, indem beispielsweise zwei Clips auf einen Zopfabschnitt zwischen zwei Würsten angebracht werden. Beim Setzen der Clips bzw. der Verschlussklammern wird eine Schlaufe mit einem Clip eingeclipt. Bislang werden die Portionen auf einem Tisch produziert. Auf dem Tisch werden diese dann von Bedienpersonal aufgereiht und jede Schlaufe auf den Rauchstock aufgefädelt. Die Rauchstöcke werden dann meistens in einen Rauchwagen gehängt. Dabei muss darauf geachtet werden, dass die Portionen sich nicht berühren, da sonst der Rauch nicht überall an die Wurstportionen hin kommt, was beispielsweise optisch durch Flecken sichtbar wird. Diese Tätigkeit ist sehr personalintensiv und begrenzt die mögliche Leistung einer Produktionslinie.

Es wurde bereits (siehe WO-92/03929) versucht, die Portionen mit einem Greifelement an der Schlaufe zu greifen, wobei die Greifelemente vertikal umlaufend angeordnet sind. Die Greifelemente ziehen dabei die Schlaufen über den Rauchstock. Die Greifelemente werden an einer bestimmten Stelle geöffnet, so dass die Portion mit der Schlaufe auf den Rauchstock fällt. Die Genauigkeit der Hängeposition auf dem Rauchstock hängt aber von der Massenträgheit der Portion, der Reibung der Schlaufe auf dem Rauchstock sowie der linearen Geschwindigkeit der Greifelemente ab. Ist der Rauchstock voll bestückt, wird der Rauchstock quer zu seiner Längsachse transportiert und der nächste leere Rauchstock wird in Beladeposition gebracht und bestückt. Dieser Lösungsversuch ermöglicht jedoch keine ausreichend definierten Produktabstände beim Ablegen auf den Rauchstock. Auch die Flexibilität bezüglich der zu verwendenden Rauchstöcke ist sehr eingeschränkt.

Hiervon ausgehend liegt der vorliegenden Erfindung die Aufgabe zugrunde, ein Verfahren und eine Vorrichtung bereitzustellen, die ein verbessertes Aufnehmen von Wurstportionen mit Aufhängeschlaufen auf einen Rauchstock ermöglichen, wobei die Leistung einer Produktionslinie erhöht werden kann, der Personaleinsatz reduziert werden kann und darüber hinaus die Aufhängeschlaufen einen definierten Produktabstand aufweisen.

Erfindungsgemäß wird diese Aufgabe durch die Merkmale der Ansprüche 1 und 9 gelöst.

Dadurch, dass die Aufhängeschlaufen von einem Aufhängehaken übernommen und weiter transportiert werden, kann ein Rauchstock in die Aufhängeschlaufen eingeführt werden, wobei dann die Wurstportionen an den Aufhängeschlaufen zusammen mit den Rauchstock aus den Aufhängehaken abgenommen werden können. Somit müssen die Portionen nicht mehr länger auf dem Tisch produziert werden, so dass Personal eingespart werden kann. Darüber hinaus weisen die Aufhängeschlaufen dadurch, dass die Aufhängehaken einen vorab eingestellten Abstand zueinander aufweisen, ebenfalls einen genau definierten Produktabstand zueinander auf. Somit kann sichergestellt werden, dass die Portionen sich nicht berühren, so dass der Rauch überall an die Wurstportionen hin kommt und somit beim Räuchern keine Flecken auf den Wurstportionen entstehen. Durch das exakte Positionieren des Aufhängehakens an der Übergabeposition ist sichergestellt, dass der Haken zuverlässig in die Schlaufe einfädeln kann. Dieses exakte Positionieren an einer definierten Übergabeposition wird durch die Verwendung eines geeigneten Antriebselements, z. B. eines Servomotors realisiert. Dadurch, dass die Portionen durch Einführen bzw. Einfädeln des Rauchstocks abgenommen werden, ergibt sich mindestens ein möglicher Entnahmebereich. Der Rauchstock kann beispielsweise vorne oder hinten an der Aufhängevorrichtung entnommen werden. Auch der Abnahmezeitpunkt ist variabel. Ferner können unterschiedliche Rauchstockprofile eingesetzt werden. Gemäß der Erfindung kann der Rauchstock in die Aufhängeschlaufen nach den Schritten e und f eingeführt werden. Es ist jedoch möglich, diesen Schritt vor oder gleichzeitig zu den Schritten e und f auszuführen, also erst den Rauchstock zu positionieren und dann die Schlaufen über den Rauchstock zu ziehen.

Unter Wurstportion wird entweder eine Einzelwurst mit Aufhängeschlaufe oder aber eine Wurstkette, die eine bestimmte Anzahl an Einzelwürsten umfasst, mit einer Aufhängeschlaufe verstanden.

Gemäß einer bevorzugten Ausführungsform der vorliegenden Erfindung wird die Wurstportion nach dem Clipen und Schlaufenlegen an der Aufhängeschlaufe aufgenommen und an der Aufhängeschlaufe mit der Transporteinheit transportiert. Somit kann die Wurstportion hängend zur Übergabe an den Aufhängehaken übergeben werden.

Gemäß einem bevorzugten Ausführungsbeispiel werden die Aufhängehaken gemeinsam umlaufend angetrieben, wobei die Transportgeschwindigkeit während des Umlaufs variiert. Dies soll bedeuten, dass es zusätzlich zum Stillstand mehrere unterschiedliche Transportgeschwindigkeiten gibt. So kann beispielsweise die Transportgeschwindigkeit bei der Übernahme der Aufhängeschlaufe in Schritt d kleiner sein, als beim Weitertransport in Schritt e. Dies bringt den Vorteil mit sich, dass der Haken sicher in die Schlaufe einfädeln kann, wobei die Gesamtproduktionsgeschwindigkeit durch die Erhöhung der Geschwindigkeit beim Weitertransport erhöht wird. Der Servoantrieb ermöglicht, dass der nachfolgende Aufhängehaken dann wieder in der korrekten Übergabeposition positioniert werden kann.

Die Aufhängehaken können auch gruppenweise mit einer jeweiligen Anzahl n an Portionen, die auf dem Rauchstock aufgehängt werden sollen, angeordnet sein, wobei der Abstand g zwischen den Gruppen veränderbar ist und größer als der Abstand a zwischen zwei Aufhängehaken eingestellt wird. Die Transportgeschwindigkeit zwischen den Gruppen ist dann höher als die Geschwindigkeit beim Übernehmen und Weitertransportieren der Aufhängeschlaufen in der entsprechenden Gruppe. Somit kann die Gesamtproduktionsgeschwindigkeit erhöht werden, während dennoch eine sichere Aufnahme der Schlaufen auf die Haken gewährleistet ist. Die gruppenweise Anordnung der Aufhängehaken ermöglicht auch ein sicheres und schnelles Einführen des Rauchstocks, da der Bediener sofort erkennt, wie viele Einzelportionen auf den Rauchstock von den Haken abgenommen werden müssen.

Es ist vorteilhaft, wenn die Aufhängehaken als Spreizhaken ausgebildet sind, die die Aufhängeschlaufe derart spreizen, dass der Rauchstock einfach eingeführt werden kann. Das bedeutet, dass der Aufhängehaken an seinem Auflageabschnitt vorzugsweise eine größere laterale Abmessung als der Durchmesser, bzw. Querschnitt des Rauchstocks im Endbereich aufweist. Somit ergibt sich eine Fläche innerhalb der Aufhängeschlaufe, deren Höhe und Breite größer sind als Höhe und Breite des Rauchstocks. Daher kann die Abnahmegeschwindigkeit wesentlich erhöht werden.

Es ist vorteilhaft, wenn der Aufhängehaken als Spreizhaken ausgebildet ist, bei dem die laterale Abmessung des Auflageabschnitts an dem die Schlaufe aufliegt, veränderbar ist, so dass beispielsweise vor Schritt d die laterale Abmessung des Auflageabschnitts des Spreizhakens verkleinert werden kann, damit der Haken leichter in die Schlaufe einfädeln kann.

Gemäß der vorliegenden Erfindung kann die Vorrichtung weiter eine Steuerung umfassen, die die Transportgeschwindigkeit des Antriebselements während eines Umlaufs variiert. Die Steuerung kann dabei derart ausgelegt sein, dass der Servomotor in Abhängigkeit des Abstands der Aufhängehaken angesteuert wird, um stets auch bei veränderten Abständen (bei wechselnden Kalibern) eine exakte Positionierung des Aufhängehakens an der Übergabeposition möglich ist.

Die vorliegende Erfindung wird nachfolgend unter Bezugnahme der folgenden Zeichnungen näher erläutert.
- Figur 1: zeigt schematisch eine Seitenansicht gemäß der vorliegenden Erfindung.
- Figur 2: zeigt schematisch eine Aufsicht auf eine Ausführungsform gemäß der vorliegenden Erfindung.
- Figur 3: zeigt schematisch eine Seitenansicht eines Clipmoduls, einer Aufnahmeeinrichtung sowie einer Transporteinrichtung, die die an den Aufhängeschlaufen hängenden Wurstportionen zu der Aufhängevorrichtung transportiert.
- Figur 4: zeigt eine Wurstportion an einem Aufhängehaken.
- Figur 5: zeigt in perspektivischer Darstellung eine bevorzugte Ausführungsform eines Aufnahmehakens.
- Figur 6a,b: zeigen eine Aufhängeschlaufe in nicht gespreiztem und gespreiztem Zustand.
- Figur 7a,b: zeigen eine Aufhängeschlaufe in nicht gespreiztem und gespreiztem Zustand.
- Figur 8: zeigt einen Querschnitt durch ein Antriebselement.

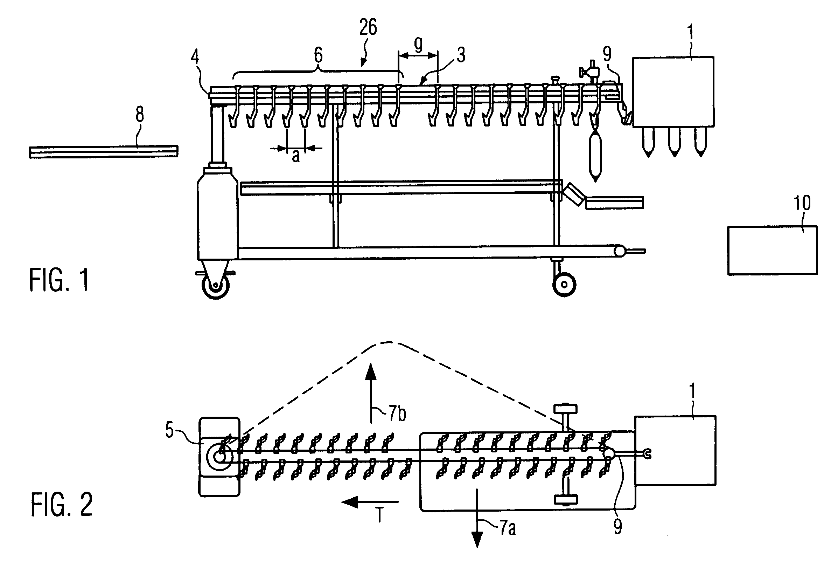

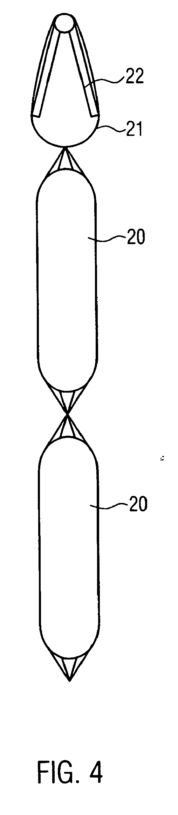

Figuren 1 und 2 zeigen eine Ausführungsform einer Vorrichtung gemäß der vorliegenden Erfindung. Die Vorrichtung gemäß der vorliegenden Erfindung dient zum Aufnehmen von Wurstportionen 20 an entsprechenden Aufhängeschlaufen 21 auf einem Rauchstock 8. Unter Wurstportionen versteht man dabei beispielsweise Einzelwürste, die an einer Schlaufe 21 aufgehängt sind, wie beispielsweise in Figur 1 gezeigt, oder aber auch eine Wurstkette mit mehreren Würsten, die an einer Aufhängeschlaufe 21 hängen, wie beispielsweise in Figur 4 gezeigt ist.

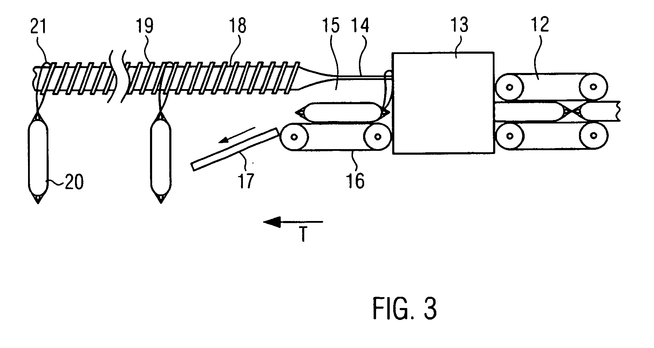

Bei der Wurstproduktion wird in bekannter Weise Wurstbrät in eine Wursthülle geschoben. Die gefüllte Wursthaut wird dabei in Einzelportionen unterteilt abgedreht, so dass sich ein entsprechender sogenannter Wurstzopf zwischen den Einzelwürsten bildet. Wie am besten aus Figur 3 hervorgeht, können die Würste dann über eine Transporteinrichtung 12, hier beispielsweise eine Längeneinheit, die zwei umlaufende Transportbänder umfasst, in Transportrichtung T zu einem Clipmodul 13 transportiert werden. Es ist auch möglich, dass der Wurststrang erst im Clipmodul 13 beispielsweise mit Scherenverdrängem unterteilt wird. Eine Tülle mit geraffter Wursthülle könnte dann anstelle der Transporteinheit direkt vor dem Clipmodul 13 angeordnet sein.

Derartige Clipmodule beziehungsweise Clipmaschinen 13 setzen in den Wurstzopf, z. B. zwei Verschlussklammern, sog. Clips um die Würste ausreichend zu verschließen. Beim Setzen der Verschlussklammern kann in bekannter Weise eine Schlaufe 21 in eine Klammer mit eingeclipt werden. Die Schlaufe 21 ist beispielsweise aus Kunstgam gefertigt. Wie in Figur 3 gezeigt ist, wird beispielsweise die Schlaufe 21 nur an einer Seite, hier am Wurstende angebracht. Die Wurstportionen können dann mit einer Trenneinheit auseinander geschnitten werden. Wenn Wurstportionen mit mehreren Einzelwürsten hergestellt werden sollen, so wird nur für jede n-te Wurstportion eine Schlaufe eingeclipt und nur an jeder n-ten Einzelwurst die Wurstkette durchtrennt.

Gemäß der vorliegenden Erfindung umfasst die Vorrichtung eine Transporteinrichtung 1, die die Wurstportionen 20 zu einer Übergabeposition 9 fördert. Die Transporteinrichtung 1 kann beispielsweise, wie in Figur 3 gezeigt ist, ausgebildet sein. Zwischen Clipmodul 13 und Transporteinheit 1 ist hierzu eine Aufnahmeeinrichtung 15 vorgesehen, die einen spitz zulaufenden Aufnahmedorn 14 umfasst, sowie ein Transportband 16, dass die Wurst in Horizontalrichtung fördert und gleichzeitig die Schlaufe 21 auf den Dorn 14 auffädelt. Die Wurst 20 rutscht dann über die Rutsche 17 in eine vertikale Transportposition auf die Transporteinheit 1, die eine Transportwelle 18 mit einer umlaufenden Transportschnecke 19 umfasst. Über die Transportschnecke 19 wird die an der Schlaufe 21 hängende Wurst 20 zur Übergabeposition 9 gebracht. Figur 3 zeigt selbstverständlich nur eine mögliche Ausführungsform für die erfindungsgemäße Transporteinheit 1.

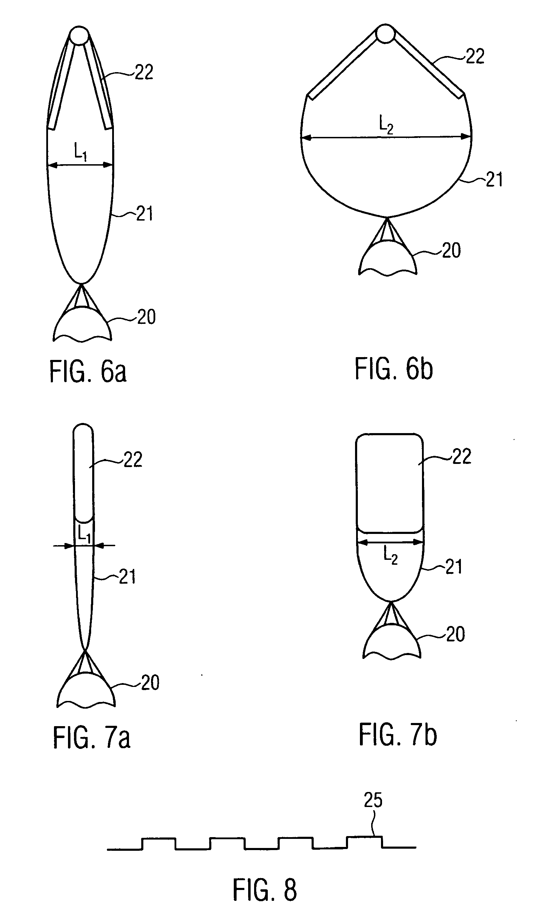

Weiter umfasst die erfindungsgemäße Vorrichtung eine Aufhängevorrichtung 26, die mehrere Aufhängehaken 2 umfasst. Diese Aufhängehaken 2 werden mittels einer Führungsschiene 3 horizontal umlaufend geführt. Ein Antriebselement 4, z. B. ein Riemen oder eine Kette bewegt die Aufnahmehaken, wobei deren Abstände a in einem Raster des Antriebelements flexibel einstellbar sind. In Figur 8 ist beispielsweise ein Querschnitt durch einen Zahnriemen 4 gezeigt, der Vorsprünge 25 aufweist, wobei die Vorsprünge bzw. Vertiefungen in Eingriff mit dem Haken gebracht werden, so dass der Haken angetrieben wird.

In Figur 1 sind die Aufhängehaken gruppenweise angeordnet, wobei eine einzelne Gruppe 6 n Aufhängehaken 2 umfasst, die einer jeweiligen Anzahl n an Portionen entspricht, die auf den Rauchstock 8 gehängt werden sollen. Der Abstand der Aufhängehaken 2 wird derart eingestellt, dass er in einer Gruppe gleich ist. Der Abstand g zwischen zwei Gruppen ist größer gewählt als der Abstand a zwischen den Aufhängehaken 2 einer Gruppe 6.

Das Antriebselement 4 wird von einem Motor, hier dem Servomotor 5, angetrieben. Dieser wird wiederum von einer Steuerung 10 angesteuert. Der Servomotor 5 ermöglicht, dass unterschiedliche Geschwindigkeitsverläufe möglich sind. Weiter ermöglicht der Servomotor, dass bestimmte Positionen exakt angefahren werden können. Dies ist wichtig, da zur Übernahme der Aufhängeschlaufen 21 auf den Aufhängehaken 2, die Aufhängehaken 2 in eine exakte Übergabeposition 9 gebracht werden müssen. Die Steuerung 10 kann dabei die Transportgeschwindigkeit des Antriebselements 4 während eines Umlaufs variieren. Die Steuerung 10 kann derart ausgelegt sein, dass der Servomotor 5 in Abhängigkeit des Abstands a der Aufhängehaken 2 angesteuert wird. Somit wird sichergestellt, dass auch bei variierenden Geschwindigkeiten, sowie unterschiedlichen Abständen a bei unterschiedlichen Kalibern stets eine exakte Übergabeposition 9 erreicht werden kann.

Weiter ist es möglich, dass beispielsweise die Transportgeschwindigkeit bei der Übernahme der Aufhängeschlaufen kleiner ist, als beim Weitertransport. Dies ermöglicht ein sicheres Einfädeln der Haken in die Aufhängeschlaufen 21. Es ist auch möglich, dass die Transportgeschwindigkeit zwischen den Gruppen 6 höher ist, als die Geschwindigkeit beim Übernehmen und Weitertransportieren der Aufhängeschlaufen 21 in der entsprechenden Gruppe 6. D. h., wenn der letzte Haken 2 einer Gruppe 6 eine Aufhängeschlaufe 2 übernommen hat, wird die Geschwindigkeit des Antriebselements 4 so lang erhöht, bis der erste Haken der nächsten Gruppe 6 in die Übergabeposition 9 verfahren wird. Dies ermöglicht einen schnellen Prozessablauf.

Die erfindungsgemäße Vorrichtung weist, wie insbesondere aus Figur 2 hervorgeht, mehrere mögliche Entnahmebereiche 7a, b auf. Somit kann beispielsweise, wie durch das Bezugszeichen 7b angedeutet wird, der Rauchstock 8 vorne von links in die Aufhängeschlaufen 21 eingeführt werden, wonach die Aufhängeschlaufen aus den Aufhängehaken 2 abgenommen werden. Wie durch das Bezugszeichen 7b dargestellt ist, kann die Entnahme auch von hinten, d. h. der gegenüberliegenden Seite, erfolgen. Dadurch, dass es mehrere Entnahmebereiche gibt, kann die Produktionsgeschwindigkeit erhöht werden. Die Entnahmeposition ist variabel und theoretisch am ganzen Umfang der Führungsschienen möglich. Die Entnahme der Portionen, z. B. mittels des Rauchstocks, kann manuell oder automatisch erfolgen.

Wie ebenfalls aus Figur 2 hervorgeht, können die Führungsbahnen der Aufhängehaken 2 parallel zueinander verlaufen. Wie durch die gestrichelte Linie dargestellt ist, ist auch eine alternative Führungsbahn möglich, wobei die Führungsbahnen nicht parallel zueinander verlaufen und zumindest eine Führungsbahn einen Winkel oder eine Kurve aufweist. Eine solche Führungsbahn ermöglicht eine Verlängerung der Führungsbahn, so dass platzsparend die Anzahl der Aufhängehaken 2 erhöht werden kann.

Vorteilhafter Weise sind die Aufhängehaken 2 so gestaltet, dass sie die Aufhängeschlaufe 21 derart spreizen, dass der Rauchstock 8 einfach in die Aufhängeschlaufen 21 zur Entnahme eingeführt werden kann. Dazu ist der Aufhängehaken 2 vorzugsweise so ausgebildet, dass der Auflageabschnitt des Hakens die Schlaufe 21 so weit spreizt, dass die Breite der Aufhängeschlaufe größer ist, als der Durchmesser, bzw. der Querschnitt am Ende des Rauchstocks 8. Dies geht insbesondere aus den Figuren 6a bis 7b hervor. Hängt die Schlaufe 21 an einem schmalen Haken, d. h. einem Haken mit schmalem Auflageabschnitt, so hängt die Schlaufe 21 relativ schlaff durch die Wurstportion 20 beschwert, nach unten, so dass die Breite I₁ der Schlaufe gering ist. Hier kann ein Rauchstock 8 nur mühsam eingefädelt werden. Ist die laterale Abmessung, sprich die Breite des Aufhängehakens 2 jedoch groß, so wird die Schlaufe 21 gespreizt, so dass sich zwischen der Schlaufe 21 eine große Breite I₂ ergibt.

Es ist besonders vorteilhaft, wenn ein Spreizhaken eingesetzt wird, dessen laterale Abmessung des Auflageabschnitts 22 veränderbar ist. So kann beispielsweise zum Einführen des Rauchstocks in die Aufhängeschlaufen eine große laterale Abmessung eingestellt werden, die die Aufhängeschlaufe 21 spreizt (siehe z. B. die Figuren 6b, 7b). Vorteilhafter Weise wird diese große laterale Abmessung des Spreizhakens 8, insbesondere vor Übernahme der Aufhängeschlaufe auf den Aufhängehaken 2 verkleinert (siehe Figur 6a, 7a), damit der Haken besser in die Schlaufe 21 einfädeln kann.

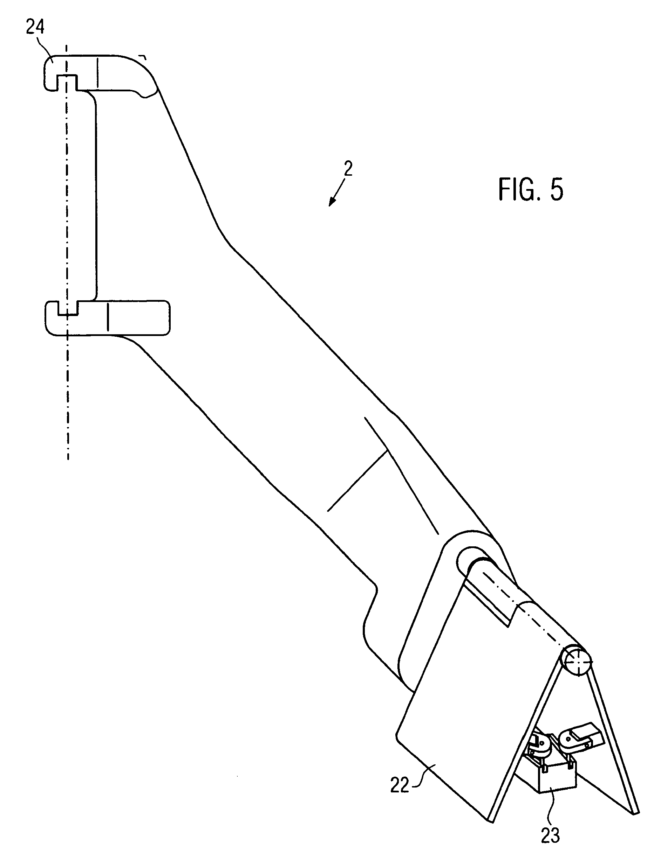

In Figur 5 ist eine mögliche Ausführungsform für einen solchen Spreizhaken gezeigt, der einen Auflageabschnitt 22, der aus zwei Spreizarmen gebildet ist, aufweist, wobei mindestens ein Spreizarm beweglich ist. Zur Änderung des Spreizwinkels ist eine Verstelleinrichtung 23 vorgesehen. Dabei kann eine mechanische oder pneumatische Verstelleinrichtung verwendet werden, um die geometrische Form des Auflageabschnitts 22, d. h. die laterale Abmessung zu verändern. An Stelle von zwei Spreizarmen kann auch, wie durch die Figuren 7a und b angedeutet ist, ein aufblasbares Kissen vorgesehen sein.

Der Rauchstock 8, wie er in Figur 1 gezeigt ist, weist beispielsweise eine Länge von 1 m auf und kann einen kreisförmigen Querschnitt oder aber auch ein anderes beispielsweise eckiges Profil aufweisen.

Die Aufhängevorrichtung 26 ist fahrbar angeordnet.

Nachfolgend wird das erfindungsgemäße Verfahren unter Bezugnahme der Figuren näher erläutert.

Zunächst wird zwischen zwei Einzelportionen für eine entsprechende Wurstportion 20 eine Aufhängeschlaufe 21 positioniert und in der Clipmaschine 13 mit einer Verschlussklammer mit eingeclipt. Die entsprechenden Wurstportionen 20 werden dann zu dem Ende der Transporteinheit 1 gefördert. Bei diesem Ausführungsbeispiel wird dabei die Schlaufe 21 auf den Dorn 14 der Aufnahmeeinrichtung 15 gezogen, wobei die Wurstportion 20 in Horizontalrichtung über die Fördereinrichtung 16 bewegt wird und dann, wie vorab in Zusammenhang mit Figur 3 beschrieben wurde, auf die Transportwelle 18 rutscht und über die Schnecke 19 ans Ende der Transporteinheit 1 gefördert wird.

Ein erster Aufhängehaken 2 einer Gruppe 6 wird durch den Servomotor 5 und das Antriebselement 4 in eine Übergabeposition 9 verfahren und fädelt in die Schlaufe 21 ein und zieht diese von der Transporteinheit 1 ab. Nach Übernahme der Aufhängeschlaufe 21 auf den Aufhängehaken 2 wird dieser Haken weiter horizontal in Transportrichtung T transportiert. Das Übernehmen und Weitertransportieren wird für n Aufhängehaken 2 und n Aufhängeschlaufen 21 wiederholt (n ∈ N). Die Steuerung 10 steuert dabei den Servomotor 5 sowie die Transporteinheit 1, damit eine korrekte Übergabe der Wurstportionen auf die Haken möglich ist. Die Steuereinrichtung 10 variiert die Transportgeschwindigkeit des Antriebselements 4 während eines Umlaufs eines Aufhängehakens 2. So kann beispielsweise die Transportgeschwindigkeit bei dem Übernehmen der Aufhängeschlaufe 21 kleiner sein, als beim Weitertransport der Wurstportion 20 auf dem Aufhängehaken 2. Auch die Geschwindigkeit zwischen den Gruppen 6 kann höher gewählt werden als die Geschwindigkeit bei der Übernahme und dem Weitertransport.

Die Steuereinrichtung 10 ist so ausgelegt, dass der Servomotor 5 in Abhängigkeit des Abstands a, g der Aufhängehaken 2 angesteuert wird. Somit ist sichergestellt, dass auch bei variierenden Geschwindigkeiten und unterschiedlichen Kalibern und variierenden Abständen die Aufhängehaken stets an eine exakte Übergabeposition gebracht werden können.

Haben alle Aufhängehaken 2 einer Gruppe 6 eine entsprechende Wurstschlaufe 21 aufgenommen, so kann an einer entsprechenden Entnahmeposition 7 der Rauchstock 8 entweder manuell oder automatisch in die Aufhängeschlaufen 21 eingeführt werden. Die Entnahmeposition ist variabel und theoretisch am ganzen Umfang der Führungsschiene möglich. Zur Abnahme der Aufhängeschlaufen 21 aus den Aufhängehaken 2 wird der Rauchstock 8 angehoben und vor den Aufnahmehaken 2 weggeführt.

Es ist möglich, gemäß einer bevorzugten Ausführungsform zur Abnahme der Wurstportionen den Aufhängehaken zu spreizen, so dass die Aufhängeschlaufe 21, wie zuvor beschrieben, gespreizt wird. Vor dem Übernehmen einer weiteren Aufhängeschlaufe wird dann die laterale Abmessung des Spreizhakens wieder verringert, damit der Spreizhaken besser einfädeln kann.

Ein solcher Spreizhaken ist zwar vorteilhaft, jedoch nicht zwingend nötig. Es kann auch ein Spreizhaken verwendet werden, der eine ausreichende laterale Abmessung des Auflageabschnitts 22 aufweist, die ausreicht, dass die Aufhängeschlaufe 21 so weit gespreizt wird, dass ein entsprechender Rauchstock 8 gut eingefädelt werden kann. Dabei ist die laterale Abmessung des Auflageabschnitts 22 vorzugsweise größer als die Breite des Rauchstocks. Damit der Haken an der Übergabeposition dennoch leicht in die Schlaufe 21 einfädeln kann, kann die Transporteinheit 1 eine entsprechende Spreizeinrichtung aufweisen, die die Aufhängeschlaufe 21 spreizt.

Bei dem oben gezeigten Verfahren wurde der Rauchstock in die Schlaufen eingeführt. Es ist jedoch auch möglich, dass erst der Rauchstock 8 in den Entnahmebereich gebracht wird und dann die Schlaufen 21 während der Produktion über den Rauchstock 8 transportiert werden.

Mit der vorliegenden Erfindung können die einzelnen Portionen mit Schlaufe mit definierten Abständen auf den Rauchstock aufgenommen werden. Es ist kein manuelles Auffädeln der Schlaufen mehr nötig. Außerdem ist Zeitpunkt und Position bei der Abnahme des Rauchstocks variabel.

## Patentansprüche

1. Verfahren zum Aufnehmen von Wurstportionen (20) mit Aufhängeschlaufen (21) auf einen Rauchstock (8) mit folgenden Schritten:
a) Anbringen einer Aufhängeschlaufe (21) an eine entsprechende Wurstportion (20),
b) Transportieren der Wurstportion (20) mit der Aufhängeschlaufe (21) mit einer Transporteinheit (1),
c) Positionieren eines Aufhängehakens (2) an einer Übergabeposition (9) am Ende der Transporteinheit (1),
d) Übernehmen der Aufhängeschlaufe (21) auf den Aufhängehaken (2),
e) Weitertransportieren der Wurstportion (20) mit dem Aufhängehaken (2), **gekennzeichnet durch**
f) Wiederholen der Schritte c) bis e) für n Aufhängehaken (2) und n Aufhängeschlaufen (21), wobei die Aufhängehaken (2) jeweils einen veränderbaren vorab eingestellten Abstand (a) zueinander aufweisen, (n ∈ IN), und die Aufhängehaken (2) gemeinsam angetrieben werden,
g) Abnehmen der Aufhängeschlaufen (21) aus den Aufhängehaken (2) **durch** Anheben des Rauchstocks (8), der in die Aufhängeschlaufen eingeführt wurde.

2. Verfahren nach Anspruch 1,
**dadurch gekennzeichnet, dass**
in Schritt b) die Wurstportion an der Aufhängeschlaufe (21) aufgenommen wird und an der Aufhängeschlaufe mit der Transporteinheit (1) transportiert wird.

3. Verfahren nach Anspruch 1 oder 2,
**dadurch gekennzeichnet, dass**
der Rauchstock (8) nach den Schritten e) und f) in die Aufhängeschlaufen eingeführt wird oder vor oder gleichzeitig zu diesen Schritten, wobei erst der Rauchstock positioniert wird und dann die Aufhängeschlaufen (21) über den Rauchstock transportiert werden.

4. Verfahren nach mindestens einem der Ansprüche 1 bis 3,
**dadurch gekennzeichnet, dass**
die Aufhängehaken (2) gemeinsam umlaufend angetrieben werden, wobei die Transportgeschwindigkeit während des Umlaufs variiert.

5. Verfahren nach Anspruch 4,
**dadurch gekennzeichnet, dass**
die Transportgeschwindigkeit bei der Übernahme der Aufhängeschlaufe (21) in Schritt d kleiner ist als beim Weitertransport in Schritt e.

6. Verfahren nach mindestens Anspruch 4,
**dadurch gekennzeichnet, dass**
die Aufhängehaken (2) gruppenweise mit einer jeweiligen Anzahl n an Poritonen, die auf den Rauchstock (8) gehängt werden, angeordnet sind, wobei der Abstand g zwischen den Gruppen (6) veränderbar ist und größer als der Abstand a zwischen zwei Aufhängehaken (2) eingestellt wird, und die Transportgeschwindigkeit zwischen den Gruppen (6) höher ist, als die Geschwindigkeit beim Übernehmen und Weitertransportieren der Aufhängeschlaufen (21) in der entsprechenden Gruppe (6).

7. Verfahren nach mindestens einem der Ansprüche 1 bis 6,
**dadurch gekennzeichnet, dass**
die Aufhängehaken (2) als Spreizhaken ausgebildet sind, die die Aufhängeschlaufe (21) derart spreizt, dass der Rauchstock (8) eingeführt werden kann.

8. Verfahren nach Anspruch 7,
**dadurch gekennzeichnet, dass**
vor Schritt d die laterale Abmessung des Auflageabschnitts des Spreizhakens (8) verkleinert wird.

9. Vorrichtung zum Aufnehmen von Wurstportionen (20) mit Aufhängeschlaufen (21) auf einen Rauchstock (8) mit einer Transporteinrichtung (1) zum Transportieren der Wurstportionen, die die Aufhängeschlaufe aufweisen, zu einer Übergabeposition
**gekennzeichnet durch**
eine Aufhängevorrichtung (26) mit mehreren Aufhängehaken (2), die derart ausgebildet und positioniert sind, dass sie die Aufhängeschlaufen (21) übernehmen, wobei die Aufhängehaken (2) einen definierten einstellbaren Abstand (a) zueinander aufweisen,
ein Antriebselement (4), das die Aufhängehaken (2) umlaufend antreibt,
einen Antrieb (5), der das Antriebselement (4) antreibt, so dass die Aufhängehaken jeweils zur Übernahme der Aufhängeschlaufe (21) exakt an einer Übergabeposition positionierbar sind, sowie
mindestens einen Entnahmebereich (7a, b), in dem ein Rauchstock (8) in die Aufhängeschlaufen (21) einschieb- und anhebbar ist, zur Entnahme der Wurstportionen.

10. Vorrichtung nach Anspruch 9,
**dadurch gekennzeichnet, dass**
die Vorrichtung weiter eine Aufnahmeeinrichtung (15) zum Aufnehmen der Aufhängeschlaufen (21) an denen eine entsprechende Wurstportion hängt, umfasst, und die Transporteinrichtung (1) die Wurstportionen (20) an der Schlaufe (21) hängend transportiert.

11. Vorrichtung nach Anspruch 9 oder 10,
**dadurch gekennzeichnet, dass**
die Vorrichtung eine Steuerung (10) umfasst, die die Transportgeschwindigkeit des Antriebelements (4) während eines Umlaufs variiert.

12. Vorrichtung nach mindestens einem der Ansprüche 9 bis 11,
**dadurch gekennzeichnet, dass**
eine Steuerung (10) derart ausgelegt ist, **dass** der Antrieb (5) in Abhängigkeit des Abstands (a) der Aufhängehaken (2) angesteuert wird.

13. Vorrichtung nach mindestens einem der Ansprüche 10 bis 12,
**dadurch gekennzeichnet, dass**
die Aufhängehaken (2) als Spreizhaken ausgebildet sind, so dass ein Haken eine Schlaufe (21) so weit spreizt, dass die Breite der Aufhängeschlaufe (21) größer ist, als der Durchmesser des Rauchstocks (8).

14. Vorrichtung nach Anspruch 13,
**dadurch gekennzeichnet, dass**
der Spreizhaken derart ausgebildet ist, dass die laterale Abmessung eines Auflageabschnitts, auf dem die Schlaufe aufliegt, veränderbar ist.

## Claims

1. Method for taking up sausage portions (20) by means of suspension loops (21) onto a smoking stick (8) having the following steps:
a) attaching a suspension loop (21) to a corresponding sausage portion (20),
b) transporting the sausage portion (20) with the suspension loop (21) by means of a transport unit (1),
c) positioning a suspension hook (2) at a transfer position (9) at the end of the transport unit (1),
d) picking up the suspension loop (21) onto the suspension hook (2),
e) transporting the sausage portion (20) onwards by means of the suspension hook (2),
**characterised by**
f) repeating the steps c) to e) for n suspension hooks (2) and n suspension loops (21), wherein the suspension hooks (2) each have a variable spacing (a) set in advance relative to one another, (n ∈ IN), and the suspension hooks (2) are jointly driven,
g) taking the suspension loops (21) from the suspension hooks (2) by raising the smoking stick (8) which had been introduced into the suspension loops.

2. Method according to claim 1, **characterised in that** in step b) the sausage portion is taken up on the suspension loop (21) and is transported on the suspension loop by the transport unit (1).

3. Method according to claim 1 or 2, **characterised in that** the smoking stick (8) is introduced into the suspension loops after steps e) and f) or before or simultaneously with these steps, wherein the smoking stick is firstly positioned and then the suspension loops (21) are transported via the smoking stick.

4. Method according to at least one of claims 1 to 3, **characterised in that** the suspension hooks (2) are driven jointly in circulating fashion, wherein the transport speed varies during circulation.

5. Method according to claim 4, **characterised in that** the transport speed in the picking up of the suspension loop (21) in step d is lower than in the onward transport in step e.

6. Method according to at least claim 4, **characterised in that** the suspension hooks (2) are arranged in groups each having a number n of portions suspended on the smoking stick (8), wherein the spacing g between the groups (6) is variable and set greater than the spacing a between two suspension hooks (2) and the transport speed between the groups (6) is higher than the speed when picking up and transporting onward the suspension loops (21) in the corresponding group (6).

7. Method according to at least one of claims 1 to 6, **characterised in that** the suspension hooks (2) are constructed as expanding hooks which the suspension loop (21) spreads apart in such a way that the smoking stick (8) can be introduced.

8. Method according to claim 7, **characterised in that** prior to step d the lateral size of the support section of the expanding hook (8) is reduced.

9. Device for taking up sausage portions (20) by means of suspension loops (21) onto a smoking stick (8) having a transport device (1) for transporting the sausage portions having the suspension loop to a transfer position, **characterised by** a suspension device (26) having a plurality of suspension hooks (2) which are constructed and positioned in such a way that they take up the suspension loops (21), wherein the suspension hooks (2) have a defined adjustable spacing (a) with respect to one another, a drive element (4) which drives the suspension hooks (2) in circulating manner, a drive (5) which drives the drive element (4) so that the suspension hooks are each positionable for picking up the suspension loop (21) exactly at a transfer position, and at least one withdrawal region (7a, b) in which a smoking stick (8) is insertable into the suspension loops (21) and raisable for removing the sausage portions.

10. Device according to claim 9, **characterised in that** the device further comprises a take-up device (15) for taking up the suspension loops (21) on which a corresponding sausage portion hangs and the transport device (1) transports the sausage portions (20) hanging on the loop (21).

11. Device according to claim 9 or 10, **characterised in that** the device comprises a control system (10) which varies the transport speed of the drive element (4) during a revolution.

12. Device according to at least one of claims 9 to 11, **characterised in that** a control system (10) is designed in such a way that the drive (5) is controlled as a function of the spacing (a) of the suspension hooks (2).

13. Device according to at least one of claims 10 to 12, **characterised in that** the suspension hooks (2) are constructed as expanding hooks so that a hook spreads a loop (21) so far apart that the width of the suspension loop (21) is greater than the diameter of the smoking stick (8).

14. Device according to claim 13, **characterised in that** the expanding hook is constructed in such a way that the lateral size of a support section on which the loop rests is variable.

## Revendications

1. Procédé destiné à recevoir des portions de saucisses (20) avec des boucles d'accrochage (21) sur une barre de fumoir (8), comprenant les étapes suivantes :
a) pose d'une boucle d'accrochage (21) sur une portion de saucisse (20) correspondante,
b) transport de la portion de saucisse (20) avec la boucle d'accrochage (21) par une unité de transport (1),
c) positionnement d'un crochet de suspension (2) en une position de transfert (9) à l'extrémité de l'unité de transport (1),
d) reprise de la boucle d'accrochage (21) sur le crochet de suspension (2),
e) transport ultérieur de la portion de saucisse (20) par le crochet de suspension (2),
**caractérisé par**
f) la répétition des étapes c) à e) pour n crochets de suspension (2) et n boucles d'accrochage (21), les crochets de suspension (2) présentant chacun un écartement mutuel (a) préalablement réglé et modifiable, (n ∈ IN), et les crochets de suspension (2) étant entraînables conjointement,
g) retrait des boucles d'accrochage (21) des crochets de suspension (2) par relevage de la barre de fumoir (8), qui a été introduite dans les boucles d'accrochage.

2. Procédé suivant la revendication 1,
**caractérisé en ce que**
dans l'étape b), la portion de saucisse est reçue sur la boucle d'accrochage (21) et est transportée sur cette boucle d'accrochage par l'unité de transport (1).

3. Procédé suivant l'une des revendications 1 et 2,
**caractérisé en ce que**
la barre de fumoir (8) est introduite dans les boucles d'accrochage après les étapes e) et f) ou avant ces étapes ou en même temps que ces dernières, la barre de fumoir n'étant qu'alors positionnée, puis les boucles d'accrochage (21) étant transportées par l'intermédiaire de la barre de fumoir.

4. Procédé suivant l'une au moins des revendications 1 à 3,
**caractérisé en ce que**
les crochets de suspension (2) sont entraînés conjointement en rotation, la vitesse de transport variant pendant la rotation.

5. Procédé suivant la revendication 4,
**caractérisé en ce que**
la vitesse de transport lors de la reprise de la boucle d'accrochage (21) dans l'étape d est plus faible que lors du transport ultérieur dans l'étape e.

6. Procédé suivant au moins la revendication 4,
**caractérisé en ce que**
les crochets de suspension (2) sont disposés par groupes avec un nombre respectif n de portions, accrochées sur la barre de fumoir (8), la distance g entre les groupes (6) étant modifiable et réglée à une valeur plus importante que la distance a entre deux crochets de suspension (2), et la vitesse de transport entre les groupes (6) étant plus élevée que la vitesse lors de la reprise et du transport ultérieur des boucles d'accrochage (21) dans le groupe correspondant (6).

7. Procédé suivant l'une au moins des revendications 1 à 6,
**caractérisé en ce que**
les crochets de suspension (2) sont réalisés sous forme de crochets écarteurs, qui écartent la boucle d'accrochage (21) de telle sorte que la barre de fumoir (8) peut être introduite.

8. Procédé suivant la revendication 7,
**caractérisé en ce que**
la dimension latérale de la section d'appui du crochet écarteur (8) est réduite avant l'étape d.

9. Dispositif destiné à recevoir des portions de saucisses (20) avec des boucles d'accrochage (21) sur une barre de fumoir (8), comprenant un dispositif de transport (1) pour le transport des portions de saucisses, qui présentent les boucles d'accrochage, en direction d'une position de transfert,
**caractérisé par**
un dispositif d'accrochage (26) avec plusieurs crochets de suspension (2), qui sont réalisés et positionnés de telle sorte qu'ils reprennent les boucles d'accrochage (21), les crochets de suspension (2) présentant les uns par rapport aux autres un écartement (a) défini réglable,
un élément d'entraînement (4), qui entraîne en rotation les crochets de suspension (2),
une commande (5), qui entraîne l'élément d'entraînement (4), de sorte que les crochets de suspension sont respectivement positionnables, exactement en une position de transfert, pour la reprise de la boucle d'accrochage (21), ainsi que par
au moins une zone de retrait (7a, b), dans laquelle une barre de fumoir (8) peut être insérée et relevée dans les boucles d'accrochage (21) pour le retrait des portions de saucisses.

10. Dispositif suivant la revendication 9,
**caractérisé en ce que**
le dispositif présente en outre un dispositif de réception (15) destiné à recevoir les boucles d'accrochage (21) sur lesquelles une portion de saucisse correspondante est accrochée, et le dispositif de transport (1) transporte en suspension les portions de saucisses (20) sur la boucle (21).

11. Dispositif suivant l'une des revendications 9 et 10,
**caractérisé en ce que**
le dispositif comporte une commande (10), qui modifie la vitesse de transport de l'élément d'entraînement (4) pendant une rotation.

12. Dispositif suivant l'une au moins des revendications 9 à 11,
**caractérisé en ce que**
une commande (10) est conçue de telle sorte que l'entraînement (5) est commandé en fonction de la distance (a) des crochets de suspension (2).

13. Dispositif suivant l'une au moins des revendications 10 à 12,
**caractérisé en ce que**
les crochets de suspension (2) sont réalisés sous forme de crochets écarteurs, de sorte qu'un crochet écarte une boucle (21) au point que la largeur de la boucle d'accrochage (21) soit plus grande que le diamètre de la barre de fumoir (8).

14. Dispositif suivant la revendication 13,
**caractérisé en ce que**
le crochet écarteur est réalisé de telle sorte que la dimension latérale d'une section d'appui, sur laquelle s'applique la boucle, est modifiable.
